# EUROPEAN PATENT APPLICATION

(11) **EP 2 903 374 A1**
(43) Date of publication of application: **05.08.2015**
(21) Application number: 13841135.0
(22) Date of filing: 12.09.2013
(51) Int. Cl.: H04W 72/04, H04W 28/06

(54) **TERMINAL, COMMUNICATION METHOD, AND INTEGRATED CIRCUIT**

(30) Priority: 27.09.2012 JP 2012213928
(71) Applicant: Sharp Kabushiki Kaisha, Osaka-shi, Osaka 545-8522 (JP)
(72) Inventor: OUCHI, Wataru, Osaka 545-8522 (JP); AIBA, Tatsushi, Osaka 545-8522 (JP); IMAMURA, Kimihiko, Osaka 545-8522 (JP)
(74) Representative: Müller-Boré & Partner Patentanwälte PartG mbB
(86) International application number: PCT/JP2013/074638
(87) International publication number: WO 2014/050584

(57) **Abstract**

In a communication system in which a base station 1 and a terminal 2 communicate with each other, there are provided a terminal, a communication method, and an integrated circuit that can allow the base station 1 and the terminal 2 to perform appropriate transmission control. The terminal 2 communicating with the base station 1 includes a radio resource control module 2011 that sets a configuration of a first uplink reference signal, a configuration of a second uplink reference signal, and a first configuration; an uplink reference signal generating module 2013 that generates a first uplink reference signal, a second uplink reference signal, and an uplink demodulation reference signal based on the configurations; and a transmission unit 207 that transmits the first uplink reference signal, the second uplink reference signal, and the uplink demodulation reference signal.

## Description

### TECHNICAL FIELD

The present invention relates to a terminal, a communication method, and an integrated circuit.

### BACKGROUND ART

In communication systems such as wideband code division multiple access (WCDMA (registered trademark)), Long Term Evolution (LTE) and LTE-Advanced (LTE-A) by Third Generation Partnership Project (3GPP) or wireless LAN and worldwide interoperability for microwave access (WiMAX) by the Institute of Electrical and Electronics Engineers (IEEE), a base station (cell, transmission station, transmission device, or eNodeB) and a terminal (mobile terminal, reception station, mobile station, reception device, or user equipment (UE)) include a plurality of transmit/receive antennas, and realize high-speed data communication by using a multi-input multi-output (MIMO) technology and performing spatial multiplexing on a data signal.

In such a communication system, in order to realize data communication between the base station and the terminal, the base station needs to perform various controls for the terminal. Thus, the base station performs data communication in a downlink and an uplink by notifying the terminal of control information using a predetermined resource. For example, the base station realizes data communication by notifying the terminal of resource allocation information, modulation and coding information of the data signal, spatial multiplexing information of the data signal, and transmission power control information.

Such a communication system corresponds to time division duplex (TDD). The LTE using the TDD is also referred to as TD-LTE or LTE TDD. The TDD is a technique that can perform full duplex communication in a single frequency band by performing time division multiplexing on an uplink signal and a downlink signal.

In such a communication system, application of a traffic adaptation control technique that changes a ratio of uplink resources to downlink resources depending on uplink traffic and downlink traffic (information amount, data amount, or communication amount) to the TD-LTE has been examined. As the application method, a flexible subframe which is adaptively switched between a downlink subframe and an uplink subframe has been examined (NPL 1). The base station can receive the uplink signal or transmit the downlink signal in the flexible subframe. The terminal can perform a reception process by regarding the flexible subframe as the downlink subframe unless an instruction to transmit the uplink signal in the flexible subframe is given from the base station. A technique that dynamically changes a ratio of uplink subframes to downlink subframes depending on the uplink traffic and the downlink traffic has been examined. A technique that dynamically reconfigures TDD UL/DL configurations in a unit of radio frames has been examined. A technique that previously manages a set (combination) of TDD UL/DL configurations based on a table has been examined.

Such a communication system is a cellular communication system in which a plurality of coverage areas of the base station is arranged in a cell shape. A single base station may manage a plurality of cells. A single base station may manage a plurality of remote radio heads (RRH). A single base station may manage a plurality of local areas. A single base station may manage a plurality of heterogeneous networks (HetNets).

In such a communication system, the terminal can measure reference signal received power (RSRP) based on a cell-specific reference signal (CSR) (NPL 2).

In such a communication system, communication may be performed using carriers (component carriers) where some physical channels or signals defined in the LTE are not arranged. Here, such a carrier is referred to as a new carrier type (NCT). For example, a cell-specific reference signal, a physical downlink control channel, or a synchronization signal (primary synchronization signal or secondary synchronization signal) may not be arranged in the new carrier type. In a cell for which the new carrier type is configured, the introduction of a physical channel (PDCH: Physical Discovery Channel) for performing mobility measurement or time/frequency synchronization detection has been examined (NPL 3). The new carrier type may be referred to as an additional carrier type (ACT).

Since inter-cell interference of a sounding reference signal occurs due to the transmission by a plurality of antennas of the terminals, it is considered that channel estimation accuracy is degraded due to the sounding reference signal. As a countermeasure, a method of performing, at the time of SU-MIMO, channel estimation from a non-precoded DMRS has been examined (NPL 4).

### CITATION LIST

### [Non-Patent Document]

NPL 1: "On standardization impact of TDD UL-DL adaptation", R1-122016, 3GPP TSG-RAN WG1 Meeting #69, Prague, Czech Republic, 21 st-25th May 2012.

NPL 2: 3rd Generation Partnership Project Technical Specification Group Radio Access Network; Evolved Universal Terrestrial Radio Access (E-UTRA); Physical layer; Measurements (Release 10) 30th Mar 2011, TS36.214 v10.1.0 (2011-03).

NPL 3: "Issues Regarding Additional Carrier Type in Rel-11 CA", R1-114071, 3GPP TSG-RAN WG1 Meeting #67, San Francisco, USA, 14th-18th Nov 2011.

NPL 4: "Channel sounding enhancements for LTE-Advanced", R1-094653, 3GPP TSG-RAN WG1 Meeting #59, Jeju, Korea, 9th - 13th Nov 2009.

### DISCLOSURE OF THE INVENTION

### Problems to be Solved by the Invention

However, since transmission timings of various uplink physical channels are implicitly or explicitly configured, in a communication system that performs dynamic time division duplex (DTDD), in a case where the uplink subframe and the downlink subframe are dynamically switched, since the uplink physical channel is transmitted in the dynamically switched downlink subframe, influence on another terminal may be increased.

The present invention has been made in view of such problems, and it is an object of the invention to provide a terminal, a communication method and an integrated circuit that can perform appropriate transmission control.

### Means for Solving the Problems

(1) In order to solve the aforementioned problem, a terminal according to an aspect of the present invention is a terminal communicating with a base station. The terminal includes a radio resource control module that sets a configuration of a first uplink reference signal, a configuration of a second uplink reference signal, and a first configuration; an uplink reference signal generating module that generates a first uplink reference signal, a second uplink reference signal, and an uplink demodulation reference signal based on the configurations; and a transmission unit that transmits the first uplink reference signal, the second uplink reference signal, and the uplink demodulation reference signal, in which in a case where the first configuration is set, the transmission unit transmits the first uplink reference signal in a transmission subframe set based on the configuration of the first uplink reference signal, and in a case where the first configuration is set, and if information used for scheduling an uplink signal is included in a downlink control information format including information on a transmission request of the second uplink reference signal, transmits the second uplink reference signal together with the uplink demodulation reference signal in a first uplink subframe after predetermined subframes from a subframe in which the downlink control information format is detected.
(2) In the terminal according to the aspect of the present invention, if information used for scheduling a downlink signal is included in the downlink control information format, the transmission unit transmits in a first transmission subframe set based on the configuration of the second uplink reference signal after predetermined subframes.
(3) In the terminal according to the aspect of the present invention, the uplink reference signal generating module generates a base sequence of the uplink demodulation reference signal and a base sequence of the first uplink reference signal based on a first method, and generates a base sequence of the second uplink reference signal based on a second method.
(4) In the terminal according to the aspect of the present invention, in a case where values are independently configured for a first parameter to a third parameter, the uplink reference signal generating module initializes the base sequence of the uplink demodulation reference signal using the first parameter, initializes the base sequence of the first uplink reference signal using the second parameter, and initializes the base sequence of the second uplink reference signal using the third parameter.
(5) In the terminal according to the aspect of the present invention, if the information used for scheduling the downlink signal is included in the downlink control information format, the uplink reference generating module generates the base sequence of the second uplink reference signal based on the first method.
(6) In the terminal according to the aspect of the present invention, in a case where the transmission subframe is configured for a subframe configured as a downlink subframe, the transmission unit does not transmit the first uplink reference signal in the transmission subframe.
(7) In the terminal according to the aspect of the present invention, in a case where the first configuration is not set, the transmission unit transmits the first uplink reference signal in a transmission subframe configured for the first uplink reference signal, and transmits the second uplink reference signal in a first transmission subframe configured for the second uplink reference signal after predetermined subframes from a subframe in which the downlink control information format is detected.
(8) A communication method according to another aspect of the present invention is a communication method of a terminal communicating with a base station. The method includes a step of setting a configuration of a first uplink reference signal, a configuration of a second uplink reference signal, and a first configuration; a step of generating a first uplink reference signal, a second uplink reference signal, and an uplink demodulation reference signal based on the configurations; a step of transmitting the first uplink reference signal, the second uplink reference signal, and the uplink demodulation reference signal; a step of transmitting in a case where the first configuration is set, the first uplink reference signal in a transmission subframe set based on the configuration of the first uplink reference signal; and a step of transmitting in a case where the first configuration is set, and if information used for scheduling an uplink signal is included in a downlink control information format including information on a transmission request of the second uplink reference signal, the second uplink reference signal together with the uplink demodulation reference signal in a first uplink subframe after predetermined subframes from a subframe in which the downlink control information format is detected.
(9) The communication method according to the aspect of the present invention further includes: a step of transmitting, if information used for scheduling a downlink signal is included in the downlink control information format, in a first transmission subframe set based on the configuration of the second uplink reference signal after predetermined subframes.
(10) The communication method according to the aspect of the present invention further includes: a step of generating a base sequence of the uplink demodulation reference signal and a base sequence of the first uplink reference signal based on a first method; and a step of generating a base sequence of the second uplink reference signal based on a second method.
(11) The communication method according to the aspect of the present invention further includes: a step of initializing, in a case where values are independently configured for a first parameter to a third parameter, a base sequence of the uplink demodulation reference signal using the first parameter, initializing a base sequence of the first uplink reference signal using the second parameter, and initializing a base sequence of the second uplink reference signal using the third parameter.
(12) The communication method according to the aspect of the present invention further includes: a step of generating, if the information used for scheduling the downlink signal is included in the downlink control information format, the base sequence of the second uplink reference signal based on the first method.
(13) An integrated circuit according to still another aspect of the present invention is an integrated circuit mounted on a terminal communicating with a base station. The integrated circuit causes the terminal to exhibit: a function of setting a configuration of a first uplink reference signal, a configuration of a second uplink reference signal, and a first configuration; a function of generating a first uplink reference signal, a second uplink reference signal, and an uplink demodulation reference signal based on the configurations; a function of transmitting the first uplink reference signal, the second uplink reference signal, and the uplink demodulation reference signal; a function of transmitting in a case where the first configuration is set, the first uplink reference signal in a transmission subframe set based on the configuration of the first uplink reference signal; and a function of transmitting in a case where the first configuration is set, and if information used for scheduling an uplink signal is included in a downlink control information format including information on a transmission request of the second uplink reference signal, the second uplink reference signal together with the uplink demodulation reference signal in a first uplink subframe after predetermined subframes from a subframe in which the downlink control information format is detected.
(14) The integrated circuit according to the aspect of the present invention further causes the terminal to exhibit: if information used for scheduling a downlink signal is included in the downlink control information format, a function of transmitting in an initial transmission subframe set based on the configuration of the second uplink reference signal after predetermined subframes.
(15) The integrated circuit according to the aspect of the present invention further causes the terminal to exhibit: a function of generating a base sequence of the uplink demodulation reference signal and a base sequence of the first uplink reference signal based on a first method; and a function of generating a base sequence of the second uplink reference signal based on a second method.
(16) The integrated circuit according to the aspect of the present invention further causes the terminal to exhibit: in a case where vales are independently configured for a first parameter to a third parameter, a function of initializing a base sequence of the uplink demodulation reference signal using the first parameter, initializing a base sequence of the first uplink reference signal using the second parameter, and initializing a base sequence of the second uplink reference signal using the third parameter.

Accordingly, the base station can perform appropriate transmission control of the uplink reference signals for the terminal.

### Effects of the Invention

According to the present invention, the terminal can perform appropriate transmission control in the communication system in which the base station and the terminal communicate with each other.

### BRIEF DESCRIPTION OF THE DRAWINGS

[Fig. 1] Fig. 1 is a schematic block diagram showing the structure of a base station 1 according to a first embodiment of the present invention.
[Fig. 2] Fig. 2 is a schematic block diagram showing the structure of a terminal 2 according to the first embodiment of the present invention.
[Fig. 3] Fig. 3 is a schematic block diagram showing a process of measuring a reception power of the terminal 2 according to the respective embodiments of the present invention.
[Fig. 4] Fig. 4 is an example of the transmission of a second uplink reference signal in a condition A.
[Fig. 5] Fig. 5 is an example of the transmission of the second uplink reference signal in a condition B.
[Fig. 6] Fig. 6 is another example of the transmission of the second uplink reference signal in the condition B.

### MODE FOR CARRYING OUT THE INVENTION

### (Physical channel)

A major physical channel (or physical signal) used in LTE and LTE-A will be described. The channel refers to a medium used for signal transmission. The physical channel refers to a physical medium used for signal transmission. In the LTE and LTE-A, there is a possibility that the structure or format of the physical channel may be changed or added, but the description of the respective embodiments of the present invention will not be affected in such a case.

In the LTE and LTE-A, the scheduling of the physical channel is managed using a radio frame. One radio frame is 10 ms, and one radio frame includes ten subframes. One subframe includes two slots (that is, one slot is 0.5 ms). The scheduling of the physical channel is managed using a resource block as a minimum unit of the scheduling where the physical channel is disposed. The resource block is defined by a predetermined frequency domain where a frequency domain is constituted by an aggregation of a plurality of subcarriers (for example, twelve subcarriers) and a domain constituted by a predetermined transmission time interval (for example, one slot, seven symbols).

A synchronization signal includes three types of primary synchronization signals (PSSs), and a secondary synchronization signal (SSS) including thirty one types of symbols which are arranged alternately in the frequency domain. Five-hundred and four (504) cell identifiers (PCI: Physical layer cell identity, Physical Cell Identity or Physical Cell Identifier) that identify a base station 1 and a frame timing for radio synchronization are represented by combining the primary synchronization signals and the secondary synchronization signals. A terminal 2 specifies the cell identifier of the synchronization signal received through cell search.

A physical broadcast channel (PBCH) is transmitted to notify of a control parameter (broadcast information or system information) that is commonly used in terminals 2 within the cell. A radio resource is notified using the PDCCH, and broadcast information that is not notified in the PBCH is transmitted using a layer-3 message (system information or RRC message) by the PDSCH. As the broadcast information, a cell global identifier (CGI) indicating a cell-dedicated identifier, a tracking area identifier (TAI) that manages a standby area due to paging, random access configuration information (transmission timing timer), and common radio resource configuration information are notified.

The downlink reference signal is classified into a plurality of types according to the purpose of use. For example, cell-specific reference signals (CRS) are payload signals that are transmitted with a predetermined power to the respective cells, and are downlink reference signals that are periodically repeated in frequency domain and time domain based on a predetermined rule. The terminal measures reception quality of each of the cells by receiving the cell-specific reference signals. The terminal 2 uses downlink cell-specific reference signals as reference signals for demodulating physical downlink shared channels or physical downlink control channels that are simultaneously transmitted with the cell-specific reference signals. As a sequence used for the cell-specific reference signal, a sequence that can be identified for each cell is used. This sequence may be generated based on a pseudo-random sequence. This sequence may be generated based on a Zadoff-Chu sequence.

The downlink reference signal is also used for channel variation estimation of the downlink. The downlink reference signal used for the channel variation estimation is referred to as channel state information reference signals (CSI-RSs) or CSI reference signals. The downlink reference signals that are dedicatedly configured for the terminals are referred to as UE specific reference signals (UERSs), dedicated RSs, or downlink demodulation reference signals (DL DMRSs), and are used to demodulate the physical downlink control channel or the physical downlink shared channel.

The physical downlink shared channel (PDSCH) is also used to notify the terminal 2 of broadcast information (system information) that is not notified by the paging or the physical channel in addition to the downlink data. Radio resource allocation information of the physical downlink shared channel is represented by the physical downlink control channel.

The physical downlink control channel (PDCCH) is transmitted using several OFDM symbols from headers of the respective frames, and is used to instruct resource allocation information or the adjustment amount of increased or decreased transmission power to the terminal 2 according to the scheduling of the base station 1. By monitoring the physical downlink control channel whose destination is the terminal before the layer-3 message (paging or handover command) which is the downlink data or the downlink control data is transmitted or received and receiving the physical downlink control channel whose destination is the terminal, the terminal needs to obtain resource allocation information, which is called an uplink grant at the time of transmitting and a downlink grant (referred to as downlink assignment) at the time of receiving, from the physical downlink control channel. The physical downlink control channel may be transmitted in a resource block region that is dedicatedly allocated to the terminal from the base station in addition to being transmitted using the aforementioned OFDM symbols. The physical downlink control channel in the resource block region that is dedicatedly allocated to the terminal from the base station is referred to as an enhanced physical downlink control channel (EPDCCH: Enhanced PDCCH). The PDCCH transmitted using the aforementioned OFDM symbols is referred to as a first control channel. The EPDCCH is referred to as a second control channel. PDCCH described below basically includes EPDCCH. The uplink grant includes information used for scheduling the uplink signal. The downlink grant includes information used for scheduling the downlink signal.

The physical uplink shared channel (PUSCH) may primarily transmit uplink data and uplink control data, and may include control data such as ACK/NACK or reception quality of the downlink. The physical uplink shared channel is used to notify the base station 1 of uplink control information in addition to the uplink data. Similarly to the downlink, resource allocation information of the physical uplink shared channel is represented by the physical downlink control channel.

The physical uplink control channel (PUCCH) is used to notify acknowledgement/negative acknowledgement (ACK/NACK) of the data transmitted using the physical downlink shared channel or the channel information (channel state information) of the downlink and perform a scheduling request (SR) which is a resource allocation request (radio resource request) of the uplink. The channel state information (CSI) includes a channel quality indicator (CQI), a precoding matrix indicator (PMI), a precoding type indicator (PTI), and a rank indicator (RI). The respective indicators are expressed as indication in some cases, but the purpose of use and meaning of the indicators are the same as those of the indication.

The uplink reference signal includes a demodulation reference signal (DMRS) used for demodulating the physical uplink control channel (PUCCH) and/or the physical uplink shared channel (PUSCH) by the base station 1, and a sounding reference signal (SRS) used for primarily estimating (measuring) an uplink channel state by the base station. As the sounding reference signal, there are a periodic sounding signal (P-SRS: Periodic SRS) and an aperiodic sounding reference signal (A-SRS: Aperiodic SRS). The uplink reference signal is referred to as an uplink payload signal or an uplink payload channel. The periodic sounding reference signal is referred to as a trigger type 0 sounding reference signal (Trigger Type 0 SRS). The aperiodic sounding reference signal is referred to as a trigger type 1 sounding reference signal (Trigger Type 1 SRS). In coordinated communication, the aperiodic sounding reference signal can be divided into a signal (for example, referred to as a trigger type 1a SRS) specialized for uplink channel estimation, and a signal (for example, referred to as a trigger type 1b SRS) used to allow the base station 1 to measure the channel state of the same frequency using channel reciprocity.

The sounding reference signal is used to determine the subframe in which the sounding reference signal is transmitted according to information on a transmission subframe included in a configuration of the sounding reference signal notified by higher layer signaling. As the information on the transmission subframe, there is information which is specifically configured for the cell and information which is specifically configured for the terminal. The subrame in which the sounding reference signal shared by all of the terminals 2 within the cell is transmitted is configured for the information which is specifically configured for the cell. A subframe offset which is a subset of the subframe that is specifically configured for the cell and a transmission cycle are included in the information which is specifically configured for the terminal. The terminal 2 can determine the subframe (referred to as an SRS subframe or an SRS transmission subframe) in which the sounding reference signal can be transmitted using these information items. In a case wehre the physical uplink shared channel is transmitted in the subframe in which the sounding reference signal that is specifically configured for the cell is transmitted, the terminal can puncture a time resource of the physical uplink shared channel by the number of symbols in which the sounding reference signal is transmitted, and can transmit the signals. Thus, it is possible to avoid the collision of the transmission of the physical uplink shared channel and the transmission of the sounding reference signal between the terminals 2. The terminal 2 that transmits the physical uplink shared channel can prevent characteristic degradation. The terminal 2 that transmits the sounding reference signal can secure channel estimation accuracy. Here, the information which is specifically configured for the terminal can be independently configured from the periodic sounding reference signal and the aperiodic sounding reference signal. A first uplink reference signal is referred as a periodic SRS (P-SRS: Periodic Sounding Reference Signal) or a trigger type 0 SRS (Trigger Type 0 Sounding Reference Signal). A second uplink reference signal is referred to as an aperiodic SRS (A-SRS: Aperiodic Sounding Reference Signal) or a trigger type 1 SRS (Trigger Type 1 Sounding Reference Signal). In a case where various parameters are configured by higher layer signaling, the first uplink reference signal is periodically transmitted according to the configured transmission subframe. In a case where the transmission of the second uplink reference signal is requested, the second uplink reference signal is aperiodically transmitted based on information (SRS request) on a transmission request of a second uplink reference signal included in a downlink control information format. In a case where an SRS request included in a certain downlink control information format represents a positive or an index (value) corresponding to the positive, the terminal 2 transmits the A-SRS in a predetermined transmission subframe. In a case where the detected SRS request represents a negative or an index (value) corresponding to the negative, the terminal 2 does not transmit the A-SRS in the predetermined subframe. A DCI format accompanied by a certain field can be referred to as a DCI format used to transmit certain information (certain control information). The certain DCI format can be accompanied by a certain field.

The physical random access channel (PRACH) is a channel used to notify of a preamble sequence, and has a guard time. The preamble sequence is configured to express 6-bit information by using 64 types of sequences. The physical random access channel is used as access means of the terminal 2 to the base station 1. The terminal 2 uses the physical random access channel in order to request a radio resource in a case where the physical uplink control channel is not configured, or request a transmission timing adjustment information (referred to as timing advance (TA)) necessary to adjust an uplink transmission timing to a reception timing window of the base station 1 to the base station 1.

Specifically, the terminal 2 transmits the preamble sequence using the information on the radio resource for the physical random access channel notified from the base station 1. The terminal 2 that receives the transmission timing adjustment information configures a transmission timing timer that clocks a valid time of the transmission timing adjustment information (or which is dedicatedly configured using the layer-3 message (message notified by the higher layer signaling)) which is commonly configured based on the broadcast information, and manages an uplink state as a transmission timing adjustment state during the valid time (clocking) of the transmission timing timer and as transmission timing non-adjustment state (transmission timing unadjusted state) during a time (stopping) other than the valid time. The layer-3 message is a control-plane message exchanged in radio resource control (RRC) layers of the terminal 2 and the base station 1, and is used as the same meaning as that of RRC signaling or RRC message. The physical channels other than the aforementioned channels are not related to the respective embodiments of the present invention, and thus, the detailed description thereof will be omitted. The RRC signaling is referred to as a higher layer signaling or dedicated signaling. These information items may be notified by the system information.

### (First Embodiment)

Hereinafter, a first embodiment of the present invention will be described. A communication system according to the first embodiment includes a primary base station (referred to as a macro base station, a first base station, a first communication device, a serving base station, an anchor base station, a first access point, a first point, a macro cell, a first cell, or a primary cell) as a base station 1 (hereinafter, referred to as a base station device, an access point, a point, a transmission device, a cell, a serving cell, a transmission station, a transmission point, a transmit antenna group, a transmit antenna port group, or an eNodeB). The communication system according to the first embodiment may include a secondary base station (referred to as a remote radio head (RRH), a remote antenna, an extension antenna, a distributed antenna, a second access point, a second point, a reference point, a low power node (LPN), a micro base station, a pico base station, a femto base station, a small base station, a local area base station, a phantom base station, a home eNodeB, a second base station device, a second communication device, a cooperative base station, a cooperative base station set, a cooperative base station, a micro cell, a pico cell, a femto cell, a small cell, a phantom cell, a local area, a second cell, or a secondary cell). The communication system according to the first embodiment includes terminals 2 (hereinafter, referred to as a mobile station, a mobile station device, a terminal device, a mobile terminal, a reception device, a reception point, a reception terminal, a third communication device, a receive antenna group, a receive antenna port group, or user equipment (UE)). Here, the secondary base station may be represented as a plurality of secondary base stations. For example, a part or the whole of the coverage of the secondary base station is included in the coverage of the primary base station, and the primary base station and the secondary base station communicate with the terminal using a heterogeneous network arrangement.

In downlink transmission, the base station 1 is referred to as a transmission point (TP) in some cases. In uplink transmission, the base station 1 is referred to as a reception point (RP) in some cases. The downlink transmission point and the uplink reception point may be a path loss reference point (reference point) for downlink path loss measurement. The reference point for path loss measurement may be independently configured from the transmission point or the reception point.

The small cell, the phantom cell or the local area cell may be configured as a third cell. The small cell, the phantom cell or the local area cell may be reconfigured as the primary cell. The small cell, the phantom cell or the local area cell may be reconfigured as the secondary cell. The small cell, the phantom cell or the local area cell may be reconfigured as the serving cell.

In the small cell, the serving cell configured as the small cell or a component carrier corresponding to the small cell, some physical channels/physical signals may not be transmitted. For example, cell-specific reference signals (CRSs) or physical downlink control channels (PDCCHs) may not be transmitted. In the small cell, the serving cell configured as the small cell or the component carrier corresponding to the small cell, new physical channels/physical signals may not be transmitted.

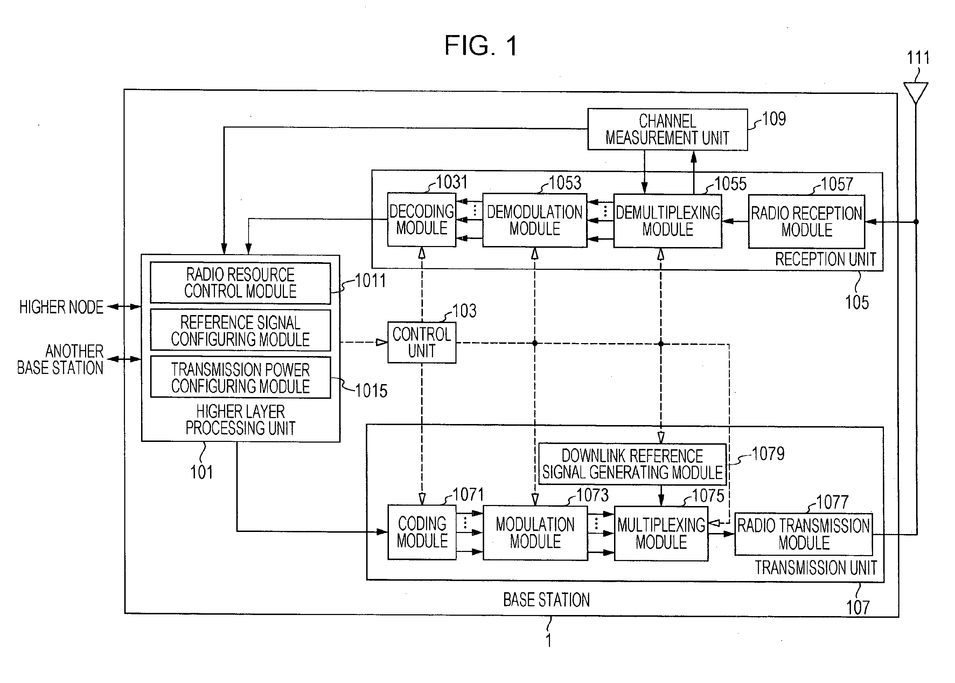

Fig. 1 is a schematic block diagram showing the structure of the base station 1 of the present invention. As shown in the drawing, the base station 1 includes a higher layer processing unit 101, a control unit 103, a reception unit 105, a transmission unit 107, a channel measurement unit 109, and a transmit/receive antenna 111. The higher layer processing unit 101 includes a radio resource control module 1011, a reference signal configuring module 1013, and a transmission power configuring module 1015. The reception unit 105 includes a decoding module 1051, a demodulation module 1053, a demultiplexing module 1055, and a radio reception module 1057. The transmission unit 107 includes a coding module 1071, a modulation module 1073, a multiplexing module 1075, a radio transmission module 1077, and a downlink reference signal generating module 1079.

The higher layer processing unit 101 processes a medium access control (MAC) layer, a packet data convergence protocol (PDCP) layer, a radio link control (RLC) layer, and a radio resource control (RRC) layer.

The radio resource control module 1011 included in the higher layer processing unit 101 generates information to be mapped in each downlink channel or obtains information from a higher node, and outputs the generated or obtained information to the transmission unit 107. The radio resource control module 1011 allocates radio resources of uplink radio resources where the terminal 2 arranges physical uplink shared channels (PUSCHs) which are uplink data information. The radio resource control module 1011 determines radio resources of downlink radio resources where physical downlink shared channels (PDSCHs) which are downlink data information are arranged. The radio resource control module 1011 generates downlink control information indicating the radio resource allocation, and transmits the generated downlink control information to the terminal 2 through the transmission unit 107. In a case where the radio resources where the PUSCHs are arranged are allocated, the radio resource control module 1011 preferentially allocates radio resources having good channel quality based on an uplink channel measurement result input from the channel measurement unit 109. That is, the radio resource control module 1011 sets configurations of various downlink signals and configurations of various uplink signals to a certain terminal 2 or a certain cell c. The radio resource control module 1011 sets a configuration of a first uplink reference signal, a configuration of a second uplink reference signal, and a first configuration to a certain terminal 2 or a certain cell c. The radio resource control module generates information on these configurations, and outputs the generated information to the transmission unit 107. The radio resource control module 1011 may set a configuration of an n-th signal (n is a natural number). That is, the radio resource control module 1011 may set the configuration of the first signal to the configuration of the n-th signal.

The reference signal configuring module 1013 included in the higher layer processing unit 101 generates information on the configuration of uplink reference signal, and outputs the generated information to the transmission unit 107. For example, the reference signal configuring module 1013 generates information on the configuration of the uplink reference signal. The information on the configuration of the uplink reference signal may include information on the configuration of the first uplink reference signal and information on the configuration of the second uplink reference signal. The information on the configuration of the uplink reference signal may include a parameter related to a configuration of a cell-specific bandwidth. The information on the configuration of the uplink reference signal may include a parameter related to a terminal-specific transmission bandwidth. The information on the configuration of the uplink reference signal may include a parameter related to a configuration of a cell-specific subframe. The information on the configuration of the uplink reference signal may include a parameter related to a transmission period. The information on the configuration of the uplink reference signal may include a parameter related to a configuration of a terminal-specific transmission subframe. The information on the configuration of the uplink reference signal may include a parameter related to a cyclic shift. The information on the configuration of the uplink reference signal may include a parameter related to a transmission comb. The information on the configuration of the uplink reference signal may include a parameter related to a frequency domain position. The information on the configuration of the uplink reference signal may include a parameter related to an antenna port number. The information on the configuration of the uplink reference signal may include a parameter indicating the duration of the reference signal. The information on the configuration of the uplink reference signal may include a parameter indicating whether or not to perform simultaneous transmission of the reference signal and Ack/Nack. The information on the configuration of the uplink reference signal may include a parameter indicating the switching of a maximum bandwidth of an UpPTS arranged in a special subframe. The information on the configuration of the uplink reference signal may include a parameter related to a configuration of a virtual cell ID. The information on the configuration of the uplink reference signal may include a parameter related to a hopping bandwidth. The information on the configuration of the uplink reference signal may include a parameter for stopping frequency hopping. These parameters may be included in the information on the configuration of the first uplink reference signal and the information on the configuration of the second uplink reference signal.

Based on uplink control information (UCI) notified by the physical uplink control channel (PUCCH) from the terminal 2, a buffer state notified from the terminal 2 or various configuration information items of the respective terminals 2 configured by the radio resource control module 1011, the higher layer processing unit 101 generates control information for controlling the reception unit 105 and the transmission unit 107, and outputs the generated control information to the control unit 103. The UCI includes at least one of Ack/Nack, a channel quality indicator (CQI), and a scheduling request (SR).

The transmission power configuring module 1015 configures transmission powers of the PRACH, the PUCCH, the PUSCH, the UL DMRS, the P-SRS and the A-SRS and parameters related to the transmission powers. The transmission power configuring module 1015 configures transmission powers of the CRS, the DL DMRS, the CSI-RS, the PDSCH and the PDCCH and parameters related to the transmission powers. That is, the transmission power configuring module 1015 configures information on power control of the uplink and the downlink. In other words, the transmission power configuring module 1015 configures information on transmission power control of the base station 1 and the terminal 2. For example, the transmission power configuring module 1015 configures a parameter related to transmission power of the base station 1. The transmission power configuring module 1015 configures a parameter related to a maximum transmission power of the terminal 2. The transmission power configuring module 1015 configures information on transmission power control of various physical channels. The transmission power configuring module 1015 configures a transmission power of the terminal 2 in consideration of interference in an adjacent base station 1 such that the PUSCH satisfies predetermined channel quality depending on information indicating the amount of interference by the adjacent base station, information indicating the amount of interference in the adjacent base station 1 which is notified from the adjacent base station, or the channel quality input from the channel measurement unit 109, and transmits information indicating the configuration of the transmission power to the terminal 2 through the transmission unit 107.

Specifically, the transmission power configuring module 1015 configures P_{0_PUSCH}, α, a power offset P_{SRS_OFFSET} (0) for the P-SRS (first power offset parameter (pSRS-Offset)), and a power offset P_{SRS_OFFSET} (1) for the A-SRS (second power offset parameter (pSRS-OffsetAp)), generates a signal including the information indicating the configurations as a radio resource control signal (higher layer signaling or a higher layer signal), and notifies the respective terminals 2 of the generated signal using the PDSCH through the transmission unit 107. The transmission power configuring module 1015 configures a TPC command, generates information indicating the TPC command, and notifies the respective terminals 2 of the generated information using the PDCCH through the transmission unit 107. The α mentioned herein is used to set the transmission power and a path loss value, and is a coefficient representing a degree of compensating for the path loss, that is, a coefficient (attenuation coefficient, path loss compensation coefficient) for determining how much the transmission power has to be increased or decreased (that is, how much the transmission power is compensated) depending on the path loss. Typically, the α has a value of 0 or 1, and the transmission power configuring module does not perform the power compensation for the path loss if the α is 0, and increases or decreases the transmission power of the terminal 2 such that the path loss does not influence on the base station 1 if the α is 1. The transmission power configuring module configures the TPC command for the SRS in consideration of the state of the terminal 2, generates information indicating the TPC command thereof, and notifies the respective terminals 2 of the generated information using the PDCCH through the transmission unit 107. The transmission power configuring module generates a DCI format including the TPC command thereof, and notifies the respective terminals 2 of the generated DCT format using the PDCCH through the transmission unit 107. A third power offset may be added. The third power offset having a range wider than that of the first power offset or the second power offset may be selected. The information indicating the TPC command may be information indicating a value associated with an absolute value or a correction value notified by the TPC command.

The control unit 103 generates control signals for controlling the reception unit 105 and the transmission unit 107 based on the control information from the higher layer processing unit 101. The control unit 103 outputs the generated control signals to the reception unit 105 and the transmission unit 107 to control the reception unit 105 and the transmission unit 107.

The reception unit 105 separates, demodulates, and decodes a reception signal received from the terminal 2 through the transmit/receive antenna 111 in response to the control signal input from the control unit 103, and outputs decoded information to the higher layer processing unit 101. The radio reception module 1057 converts (down-converts) the uplink signal received through the transmit/receive antenna 111 into an intermediate frequency (IF), and removes an unnecessary frequency component. Subsequently, the radio reception module controls an amplification level such that a signal level is appropriately maintained, performs quadrature demodulation based on an in-phase component and a quadrature component of the received signal, and converts an analog signal obtained through the quadrature demodulation into a digital signal. The radio reception module 1057 removes a portion corresponding to a guard interval (GI) from the converted digital signal. The radio reception module 1057 performs the fast Fourier transform (FFT) on a signal from which the guard interval has been removed, extracts a frequency-domain signal, and outputs the extracted frequency-domain signal to the demultiplexing module 1055.

The demultiplexing module 1055 demultiplexes the signal input from the radio reception module 1057 into signals such as the PUCCH, the PUSCH, the UL DMRS, and the SRS. The demultiplexing is performed based on radio resource allocation information which is previously determined by the base station 1 and is notified to the respective terminals 2. The demultiplexing module 1055 performs channel compensation of the PUCCH and the PUSCH based on a channel estimation value input from the channel measurement unit 109. The demultiplexing module 1055 outputs the demultiplexed UL DMRS and SRS to the channel measurement unit 109.

The demodulation module 1053 performs the inverse discrete Fourier transform (IDFT) on the PUSCH to obtain a modulation symbol, and demodulates the reception signal for each of modulation symbols of the PUCCH and the PUSCH using a previously determined modulation scheme such as binary phase shift keying (BPSK), quadrature phase shift keying (QPSK), 16 quadrature amplitude modulation (16-QAM), or 64 quadrature amplitude modulation (64-QAM) or a modulation scheme that is previously notified to the respective terminals 2 from the base station 1 using the downlink control information.

The decoding module 1051 decodes a decoding bit of the demodulated PUCCH and PUSCH at a predetermined coding rate of a predetermined coding scheme or a coding rate that is previously notified from the base station 1 to the terminal 2 using an uplink (UL) grant, and outputs the decoded data information and the uplink control information to the higher layer processing unit 101.

The channel measurement unit 109 measures a channel estimation value and channel quality from the uplink demodulation reference signal UL DMRS and SRS input from the demultiplexing module 1055, and outputs the measured channel estimation value and channel quality to the demultiplexing module 1055 and the higher layer processing unit 101. The channel measurement unit 109 measures the reception powers and/or the reception quality of the first signal to the n-th signal, and outputs the measured reception powers and/or reception quality to the demultiplexing module 1055 and the higher layer processing unit 101.

The transmission unit 107 generates a downlink reference signal in response to the control signal input from the control unit 103, codes and modulates the downlink control information and the data information input from the higher layer processing unit 101, multiplexes the downlink reference signal, the PDCCH and the PDSCH, and transmits the signal to the terminal 2 through the transmit/receive antenna 111.

The coding module 1071 performs coding such as turbo coding, convolutional coding or block coding on the downlink control information and the data information input from the higher layer processing unit 101. The modulation module 1073 modulates the coding bit using a modulation scheme such as QPSK, 16-QAM or 64-QAM. The downlink reference signal generating module 1079 generates, as a downlink reference signal, a sequence which is known to the terminal 2 and is obtained by a predetermined rule based on a cell identifier (Cell ID) for identifying the base station 1. The multiplexing module 1075 multiplexes the modulated channel and the generated downlink reference signal.

The radio transmission module 1077 performs the inverse fast Fourier transform (IFFT) on the multiplexed modulation symbols, performs OFDM modulation, and adds a guard interval to the OFDM symbols obtained through the OFDM modulation. Subsequently, the radio transmission module generates baseband digital signals, converts the baseband digital signals into analog signals, and generates intermediate-frequency in-phase components and quadrature components from the analog signals. Subsequently, the radio transmission module removes excess frequency components for the intermediate frequency bandwidth, converts (up-converts) the intermediate-frequency signals into high-frequency signals, and removes excess frequency components. Subsequently, the radio transmission module amplifies power, and transmits the signals by outputting the amplified signal to the transmit/receive antenna 111.

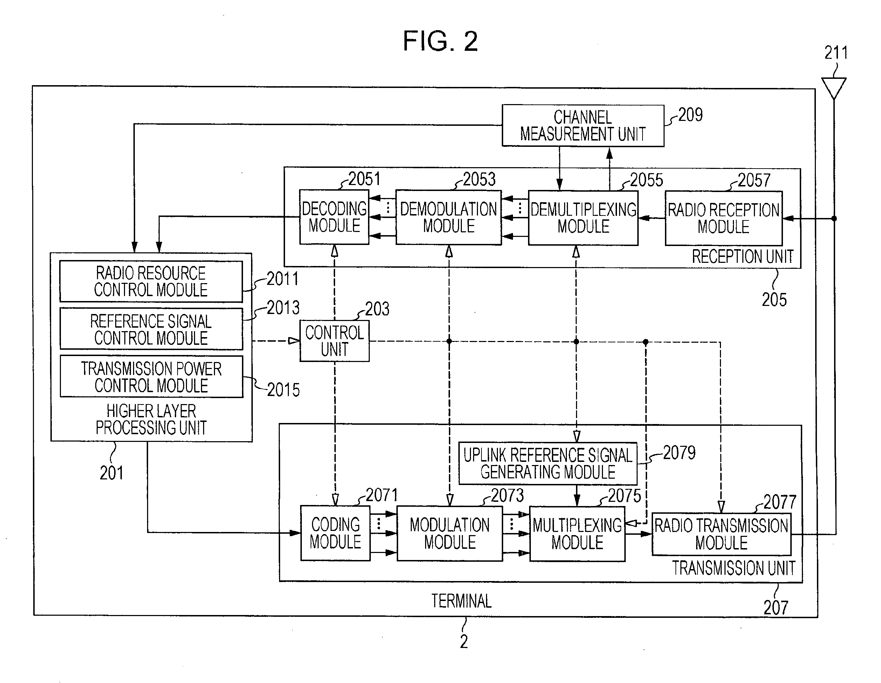

Fig. 2 is a schematic block diagram showing the structure of the terminal 2 according to the present embodiment. As shown in the drawing, the terminal 2 includes a higher layer processing unit 201, a control unit 203, a reception unit 205, a transmission unit 207, a channel measurement unit 209, and a transmit/receive antenna 211. The higher layer processing unit 201 includes a radio resource control module 2011, a reference signal control module 2013, and a transmission power control module 2015. The reception unit 205 includes a decoding module 2051, a demodulation module 2053, a demultiplexing module 2055, and a radio reception module 2057. The transmission unit 207 includes a coding module 2071, a modulation module 2073, a multiplexing module 2075, and a radio transmission module 2077.

The higher layer processing unit 201 outputs the uplink data information generated by a user operation to the transmission unit. The higher layer processing unit 201 processes a medium access control (MAC) layer, a packet data convergence protocol (PDCP) layer, a radio link control (RLC) layer, and a radio resource control (RRC) layer.

The radio resource control module 2011 included in the higher layer processing unit 201 manages various configuration information items of the terminal. The radio resource control module 2011 generates information to be mapped in each uplink channel, and outputs the generated information to the transmission unit 207. Based on the various configuration information items of the terminal which are managed by the radio resource control module 2011 and are configured by the radio resource control information notified by the PDSCH and the downlink control information notified by the PDCCH from the base station 1, the radio resource control module 2011 generates control information for controlling the reception unit 205 and the transmission unit 207, and outputs the generated control information to the control unit 203. Based on the information on the configuration of the first signal to the information on the configuration of the n-th signal notified from the base station 1, the radio resource control module 2011 sets various parameters of the respective signals. The radio resource control module generates these set information items, and outputs the generated set information to the transmission unit 207 through the control unit 203.

The radio resource control module 2011 included in the higher layer processing unit 201 obtains a sounding subframe (SRS subframe or SRS transmission subframe) which is a subframe for reserving a radio resource for transmitting the SRS broadcasted by the base station 1, information indicating a bandwidth of a radio resource that is reserved to transmit the SRS within the sounding subframe, information indicating a frequency bandwidth and a subframe for transmitting a periodic SRS notified to the terminal by the base station 1 and the amount of cyclic shifts used for a CAZAC sequence of the periodic SRS, and information indicating a frequency bandwidth for transmitting an aperiodic SRS notified to the terminal from the base station 1 and the amount of cyclic shifts used for a CAZAC sequence of the aperiodic SRS, from the reception unit 205.

The radio resource control module 2011 controls the SRS transmission based on the information. Specifically, the radio resource control module 2011 controls the transmission unit 207 such that the periodic SRS is transmitted one time or at regular intervals based on the information on the periodic SRS. In a case where the aperiodic SRS transmission is requested in the SRS request (SRS indicator) input from the reception unit 205, the radio resource control module 2011 transmits the aperiodic SRS by a predetermined number of times (for example, once) based on the information on the aperiodic SRS.

Based on the information indicating the configurations of the transmission powers of the PUCCH, the PUSCH, the periodic SRS and the aperiodic SRS, the transmission power control module 2015 included in the higher layer processing unit 201 outputs the control information to the control unit 203 such that the transmission powers are controlled. Specifically, based on P_{0-PUSCH}, α, a power offset P_{SRS}-_{OFFSET} (0) for the periodic SRS (first power offset (pSRS-Offset)), a power offset P_{SRS-OFFSET}(1) for the aperiodic SRS (second power offset (pSRS-OffsetAP)) and a TPC command obtained from the reception unit 205, the transmission power control module 2015 controls the transmission power of the periodic SRS and the transmission power of the aperiodic SRS. The transmission power control module 2015 switches between the first power offset and the second power offset depending on whether or not the P_{SRS}__{OFFSET} is for the periodic SRS or the aperiodic SRS. In a case where the third power offset is configured for the periodic SRS and/or the aperiodic SRS, the transmission power control module 2015 sets the transmission power based on the third power offset. A value having a range wider than that of the first power offset or the second power offset may be configured for the third power offset. The third power offset may be configured for each of the periodic SRS and the aperiodic SRS.

In a case where the sum of the transmission power of the first link reference signal and the transmission power of the physical uplink shared channel exceeds a maximum transmission power (for example, P_{CMAX}) configured for the terminal 2 in a certain serving cell and a certain subframe, the transmission power control module 2015 outputs instruction information to the transmission unit 207 through the control unit 203 such that the physical uplink shared channel is transmitted. In a case where the sum of the transmission power of the first uplink reference signal and the transmission power of the physical uplink control channel exceeds a maximum transmission power configured for the terminal 2 in a certain serving cell and a certain subframe, the transmission power control module 2015 outputs instruction information to the transmission unit 207 through the control unit 203 such that the physical uplink control channel is transmitted.

If the information on the first configuration is notified, in a case where the sum of the transmission power of the second uplink reference signal and the transmission power of the uplink demodulation reference signal exceeds the maximum transmission power (for example, P_{CMAX}) configured for the terminal 2 in a certain serving cell and a certain subframe, the transmission power control module 2015 outputs instruction information to the transmission unit 207 through the control unit 203 such that the uplink demodulation reference signal is transmitted. In a case where the sum of the transmission power of the second uplink reference signal and the transmission power of the physical uplink shared channel exceeds the maximum transmission power configured for the terminal 2 in a certain serving cell and a certain subframe, the transmission power control module 2015 outputs instruction information to the transmission unit 207 through the control unit 203 such that the physical uplink shared channel is transmitted. In a case where the sum of the transmission power of the second uplink reference signal and the transmission power of the physical uplink control channel exceeds the maximum transmission power configured for the terminal 2 in a certain serving cell and a certain subframe, the transmission power control module 2015 outputs instruction information to the transmission unit 207 through the control unit 203 such that the physical uplink control channel is transmitted.

In a case where a plurality of physical channels is transmitted at the same timing (for example, subframe), the transmission power control module 2015 can control transmission powers of various physical channels or can control the transmission of various physical channels depending on the priority of the various physical channels. The transmission power control module 2015 outputs the control information to the transmission unit 207 through the control unit 203.

In a case where carrier aggregation using a plurality of serving cells or a plurality of component carriers corresponding to the plurality of serving cells is performed, the transmission power control module 2015 can control transmission powers of various physical channels or control the transmission of various physical channels depending on the priority of the physical channels. The transmission power control module 2015 may control the transmission of various physical channels transmitted from the cell depending on the priority of the cell. The transmission power control module 2015 outputs the control information to the transmission unit 207 through the control unit 203.

The reference signal control module 2013 included in the higher layer processing unit 201 outputs instruction information to the transmission unit 207 through the control unit 203 such that the uplink reference signal is generated based on the information on the configuration of the uplink reference signal notified from the base station 1. That is, the reference signal control module 2013 outputs the information on the configuration of the uplink reference signal to the uplink reference signal generating module 2079 through the control unit 203.

The control unit 203 generates control signals for controlling the reception unit 205 and the transmission unit 207 based on the control information from the higher layer processing unit 201. The control unit 203 outputs the generated control signals to the reception unit 205 and the transmission unit 207 to control the reception unit 205 and the transmission unit 207.

The reception unit 205 separates, demodulates and decodes the reception signal received from the base station 1 through the transmit/receive antenna 211 in response to the control signal input from the control unit 203, and outputs the decoded information to the higher layer processing unit 201.

The radio reception module 2057 converts (down-converts) the downlink signal received through the receive antenna into an intermediate frequency, removes an unnecessary frequency component, and controls an amplification level such that a signal level is appropriately maintained. Subsequently, the radio reception module performs quadrature demodulation based on an in-phase component and a quadrature component of the received signal, and converts the analog signal obtained through the quadrature demodulation into a digital signal. The radio reception module 2057 removes a portion corresponding to a guard interval from the converted digital signal, performs the fast Fourier transform on a signal from which the guard interval has been removed, and extracts a frequency-domain signal.

The demultiplexing module 2055 demultiplexes the extracted signal into a physical downlink control channel (PDCCH), a PDSCH and a downlink reference signal (DRS). The demultiplexing is performed based on radio resource allocation information notified by the downlink control information. The demultiplexing module 2055 performs the channel compensation of the PDCCH and the PDSCH based on a channel estimation value input from the channel measurement unit 209. The demultiplexing module 2055 outputs the demultiplexed downlink reference signals to the channel measurement unit 209.

The demodulation module 2053 performs demodulation such as a QPSK modulation scheme on the PDCCH, and outputs the demodulated PDCCH to the decoding module 2051. The decoding module 2051 tries to decode the PDCCH, and outputs the decoded downlink control information to the higher layer processing unit 201 in a case where the decoding succeeds. The demodulation module 2053 performs demodulation using a modulation scheme such as QPSK, 16-QAM or 64-QAM notified by the downlink control information on the PDSCH, and outputs the demodulated PDSCH to the decoding module 2051. The decoding module 2051 performs decoding at a coding rate notified by the downlink control information, and outputs the decoded data information to the higher layer processing unit 201.

The channel measurement unit 209 measures a path loss of the downlink from the downlink reference signal input from the demultiplexing module 2055, and outputs the measured path loss to the higher layer processing unit 201. The channel measurement unit 209 calculates a channel estimation value of the downlink from the downlink reference signal, and outputs the calculated channel estimation value to the demultiplexing module 2055. The channel measurement unit 209 measures the reception powers of the first signal and/or the second signal or measures the reception quality thereof according to various information items on the measurement notified from the reference signal control module 2013 through the control unit 203. The channel measurement unit outputs the measurement result to the higher layer processing unit 201. In a case where an instruction to evaluate the channel of the first signal and/or the second signal is given, the channel measurement unit 209 may output the result related to the channel evaluation of these signals to the higher layer processing unit 201.

The transmission unit 207 generates an uplink demodulation reference signal (UL DMRS) and/or a sounding reference signal (SRS) in response to the control signal input from the control unit 203, and codes and modulates the data information input from the higher layer processing unit 201. Subsequently, the transmission unit multiplexes the PUCCH, the PUSCH and the generated UL DMRS and/or SRS, adjusts the transmission powers of the PUCCH, the PUSCH, the UL DMRS and the SRS, and transmits the adjusted transmission powers to the base station 1 through the transmit/receive antenna 211. In a case where the information on the measurement result is output from the higher layer processing unit 201, the transmission unit 207 transmits the measurement result to the base station 1 through the transmit/receive antenna 211. In a case where channel state information which is the result related to the channel evaluation is output from the higher layer processing unit 201, the transmission unit 207 feeds the channel state information back to the base station 1. That is, the higher layer processing unit 201 generates channel state information (CSI) based on the measurement result notified from the channel measurement unit, and feeds the generated channel state information back to the base station 1 through the control unit 203.

The coding module 2071 performs coding such as turbo coding, convolutional coding or block coding on the uplink control information and the data information input from the higher layer processing unit 201. The modulation module 2073 modulates the coding bit input from the coding module 2071 using a modulation scheme such as BPSK, QPSK, 16-QAM, or 64-QAM.

The uplink reference signal generating module 2079 generates an uplink reference signal based on the information on the configuration of the uplink reference signal. That is, the uplink reference signal generating module 2079 generates a known CAZAC sequence which is known to the base station 1 and is obtained by a predetermined rule based on the bandwidth for mapping the first uplink reference signal, the second uplink reference signal, the uplink demodulation reference signal and the cell identifier for identifying the base station 1. The uplink reference signal generating module 2079 gives cyclic shifts to a CAZAC sequence of the generated uplink demodulation reference signal, the first uplink reference signal and the second uplink reference signal in response to the control signal input from the control unit 203.

The uplink reference signal generating module 2079 may initialize a base sequence of the uplink reference signal, the sounding reference signal and/or the uplink demodulation reference signal based on a predetermined parameter. The predetermined parameter may be the same parameter for the respective reference signals. The predetermined parameter may be parameters that are independently configured for the respective reference signals. That is, the uplink reference signal generating module 2079 can initialize the base sequence of the respective reference signals using the same parameter if there is no the independently configured parameters. Here, the initializing of the base sequence includes the initializing of a generator used for generating the base sequence based on a specific process.

The multiplexing module 2075 rearranges the arrangement of the modulation symbols of the PUSCH in response to the control signal input from the control unit 203, performs the discrete Fourier transform (DFT) on the rearranged modulation symbols, and multiplexes the PUCCH and PUSCH signals and the generated UL DMRS and SRS. In a case where the first configuration is set, the multiplexing module 2075 may multiplex the uplink demodulation reference signal and the second uplink reference signal using the same symbols (SC-FDMA symbols or OFDM symbols). In this case, the uplink demodulation reference signal and the second uplink reference signal may be transmitted through different antenna ports.

The radio transmission module 2077 performs the inverse fast Fourier transform on the multiplexed signals, performs modulation such as a SC-FDMA scheme, and adds a guard interval to the SC-FDMA symbols obtained through the SC-FDMA modulation. Subsequently, the radio transmission module generates baseband digital signals, converts the baseband digital signals into analog signals, and generates intermediate-frequency in-phase components and quadrature components from the analog signals. Subsequently, the radio transmission module removes excess frequency components for the intermediate frequency bandwidth, converts (up-converts) the intermediate-frequency signals into high-frequency (radio frequency) signals, and removes excess frequency components. Subsequently, the radio transmission module amplifies power, and transmits the signals by outputting the amplified signal to the transmit/receive antenna 211.

In the first embodiment, the base station 1 transmits the information on the configuration of the first uplink reference signal and the information on the configuration of the second uplink reference signal to the terminal 2. The base station 1 transmits the information on the first configuration to the terminal 2. The terminal 2 sets the configuration of the first uplink reference signal and the configuration of the second uplink reference signal by the higher layer. In a case where the first configuration is set by the higher layer, the terminal 2 transmits the first uplink reference signal (for example, P-SRS) in the first uplink reference subframe set based on the parameter related to the transmission subframe included in the configuration of the first uplink reference signal, and transmits the second uplink reference signal (for example, A-SRS) together with the uplink demodulation reference signal in a first uplink subframe after predetermined subframes (for example, four subframes) from the subframe in which the downlink control information format including the information on the transmission request of the second uplink reference signal is detected. The first uplink subframe after the predetermined subframes may be a flexible subframe. In a case where the first configuration is not set by the higher layer, the terminal 2 may transmit the second uplink reference signal in the second uplink reference signal subframe set based on the parameter related to the transmission subframe included in the configuration of the second uplink reference signal. That is, the terminal 2 can switch the transmission timing of the second uplink reference signal depending on whether or not the first configuration is set by the higher layer. That is, if the first configuration is set, the terminal 2 can flexibly transmit the second uplink reference signal regardless of the parameter related to the transmission subframe included in the configuration of the second uplink reference signal.

In a case where the first configuration is set to the terminal 2, the terminal 2 may generate the base sequence of the first uplink reference signal based on a first method, and may generate the base sequence of the second uplink reference signal based on a second method. In a case where a parameter related to a virtual cell ID (VCID: virtual cell identity or virtual cell identifier) is configured for the information on the configuration of the first uplink reference signal and/or the information on the configuration of the second uplink reference signal, the terminal 2 may initialize the base sequence of the first uplink reference signal and/or the base sequence of the second uplink reference signal at the beginning of each radio frame on the basis of the virtual cell ID (referred to as a scrambling initializing ID, a scrambling ID, or a reference signal ID). In a case where the parameter related to the virtual cell ID is not configured for the information on the configuration of the first uplink reference signal and/or the information on the configuration of the second uplink reference signal, the terminal 2 may initialize the base sequence of the first uplink reference signal and/or the base sequence of the second uplink reference signal at the beginning of each radio frame on the basis of a physical cell ID (PCI: Physical Layer Cell Identity or Physical Cell Identifier).

In a case where the virtual cell IDs are independently configured for the uplink demodulation reference signal, the first uplink reference signal and the second uplink reference signal, the terminal 2 may initialize the base sequences of these signals based on the respective virtual cell IDs. That is, the terminal 2 may initialize the base sequence of the first uplink reference signal based on the first parameter, may initialize the base sequence of the second uplink reference signal based on the second parameter, and may initialize the base sequence of the uplink demodulation reference signal based on the third parameter.

In a case where the first configuration is not set to the terminal 2, the terminal 2 may generate the base sequence of the first uplink reference signal and the base sequence of the second uplink reference signal based on a first method. That is, in a case where the first configuration is not set by the higher layer, the terminal 2 may generate the base sequence of the first uplink reference signal and the base sequence of the second uplink reference signal using the same method. In a case where the first configuration is not set to the terminal 2 by the higher layer, the terminal 2 may initialize the base sequence of the first uplink reference signal and the base sequence of the second uplink reference signal at the beginning of each radio frame on the basis of the physical cell ID. That is, in a case where the first configuration is not set by the higher layer, the terminal 2 may initialize the base sequence of the first uplink reference signal and the base sequence of the second uplink reference signal using the same parameter.

The information on the first configuration may be information on a configuration of a dynamic TDD. The information on the first configuration may be information on a configuration of the small cell (or the phantom cell). The information on the first configuration may be information on a carrier type. The information on the first configuration may be information on a TDD UL/DL configuration. The information on the first configuration may be associated with information on a measurement configuration or information on a measurement object configuration. The information on the first configuration may be included in information on a TDD configuration. The information on the first configuration may be included in information on a radio resource configuration. The information on the first configuration may be information on a configuration of a flexible subframe. The information on the first configuration may be included in information on a serving cell. The information on the first configuration may be information on time switching of uplink carrier aggregation. The information on the first configuration may be information on dynamic switching of an uplink radio frequency (UL RF). For example, the information on the dynamic switching of the uplink radio frequency (UL RF) refers to information on switching of an uplink carrier frequency (or a transmission frequency). The information on the first configuration may be information on an uplink transmission scheme. For example, the information on the uplink transmission scheme refers to information for instructing to select SC-FDMA or UL OFDM. The information on the first configuration may be information on a release 12. The information on the first configuration may be information on whether or not to transmit the physical uplink control channel in the second cell (secondary cell). The information on the first configuration may be uniquely determined in the system. The information on the first configuration may be broadcasted as shared information or system information. The information on the first configuration may be individually notified to each terminal 2 as terminal-specific information. The terminal 2 may notify the base station 1 of information indicating whether or not the terminal supports a function of setting the first configuration by using UE capability. In a case where the terminal supports this function, a value (parameter, information) indicating that the terminal can support this function may be configured for the information indicating whether or not the terminal supports the function of setting the first configuration. In a case where the terminal does not support this function, the information indicating whether or not the terminal supports the function of setting the first configuration may not be included in the UE capability.

If a case where the first configuration is not set to the terminal 2 is assumed as a condition A and a case where the first configuration is set to the terminal 2 is assumed as a condition B, various parameters configured for the second uplink reference signal of the condition A and various parameters configured for the second uplink reference signal of the condition B may be independently configured. Various parameters configured for the first uplink reference signal of the condition A may be the same as those configured for the first uplink reference signal of the condition B. A method of generating the base sequences applied to the second uplink reference signal of the condition A and the second uplink reference signal of the condition B may be independently configured. A method (expression used for initializing) of initializing the base sequences applied to the second uplink reference signal of the condition A and the second uplink reference signal of the condition B may be independently configured. The second uplink reference signal of the condition A may be mapped by one symbol in one subframe (for example, 14 symbols), whereas the second uplink reference signal of the condition B may be mapped by two symbols (or a plurality of symbols) in one subframe. The second uplink reference signal of the condition A and the second uplink reference signal of the condition B may be transmitted using different symbols. For example, in a case where one subframe includes 14 symbols, the second uplink reference signal of the condition A may be mapped to a fourteenth symbol, and the second uplink reference signal of the condition B may be mapped to a fourth symbol and/or an eleventh symbol. That is, the second uplink reference signal of the condition B may be transmitted using the same symbol as that of the uplink demodulation reference signal. Here, the symbol may be a time-domain resource, and may be referred to as an SC-FDMA symbol or an OFDM symbol. The second uplink reference signal of the condition B may be referred to as a second demodulation reference signal (2nd DMRS), a non-precoded DMRS, a non-precoded SRS, an un-used DMRS, an un-used SRS, a DMRS for sounding, a DMRS based sounding, a trigger type X SRS (X=0, 1, 2, ...), or an enhanced reference signal (ERS). The DMRS based sounding refers that sounding (channel state measurement) is performed using the DMRS resource.

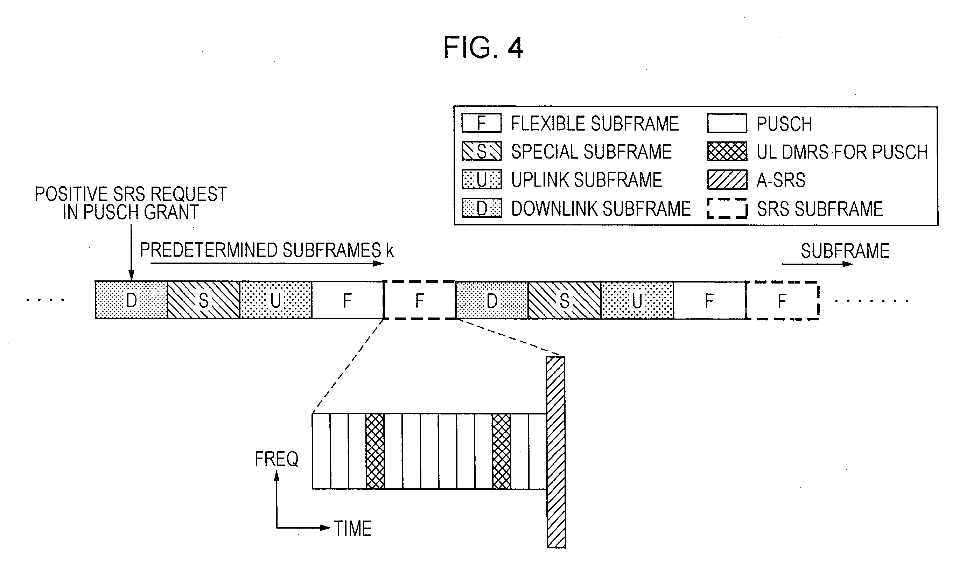

Fig. 4 is an example of the transmission of the second uplink reference signal in the condition A. In a case where the information (positive SRS request) on the transmission request of the second uplink reference signal (A-SRS) is detected from the received downlink control information format (DCI format), the terminal 2 transmits the second uplink reference signal in a first SRS subframe after predetermined subframes (for example, four subframes) from the subframe in which the information on the transmission request of the second uplink reference signal is detected. The SRS subframe (subframe capable of transmitting second uplink reference signal) is determined based on the configuration of the second uplink reference signal.

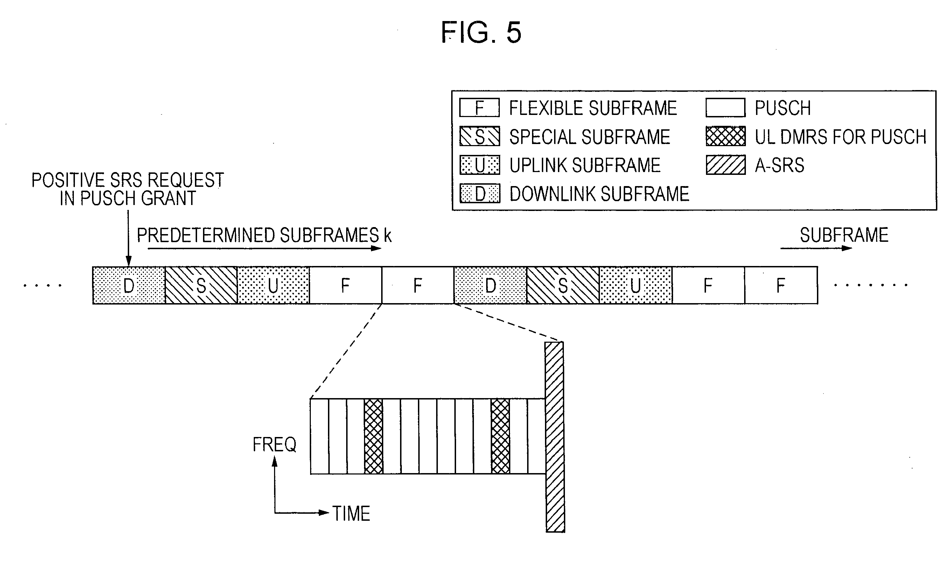

Fig. 5 is an example of the transmission of the second uplink reference signal in the condition B. In a case where the information (positive SRS request) on the transmission request of the second uplink reference signal (A-SRS) is detected from the received uplink grant (UL grant, PUSCH grant or UL DCI format), the terminal 2 transmits the second uplink reference signal in a first uplink subframe after predetermined subframes (for example, four subframes) from the subframe in which the information on the transmission request of the second uplink reference signal is detected. In this case, the second uplink reference signal is transmitted while being arranged in the last symbol within the subframe. That is, in a case where one subframe includes 14 symbols, the second uplink reference signal is arranged in the fourteenth symbol. The base sequence of the second uplink reference signal and the base sequence of the first uplink reference signal may not be generated as the same sequence. Here, the uplink subframe may be a flexible subframe.

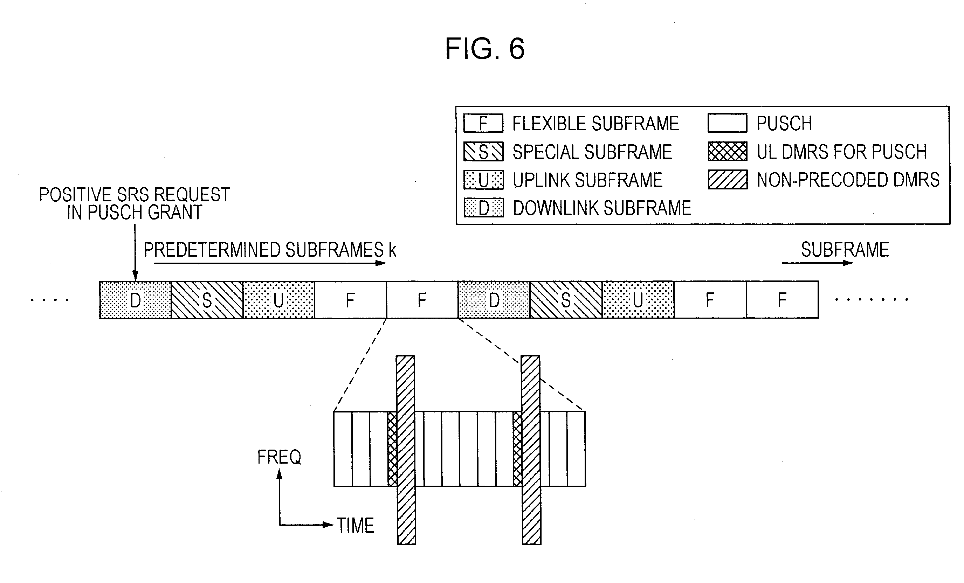

Fig. 6 is another example of the transmission of the second uplink reference signal in the condition B. In a case where the information (positive SRS request) on the transmission request of the second uplink reference signal (A-SRS) is detected from the received uplink grant (UL grant, PUSCH grant or UL DCI format), the terminal 2 transmits the second uplink reference signal in a first uplink subframe after predetermined subframes (for example, four subframes) from the subframe in which the transmission request of the second uplink reference signal is detected. In this case, the second uplink reference signal is transmitted while being arranged in the same symbol as that of the uplink demodulation reference signal. That is, in a case where one subframe includes 14 symbols, the second uplink reference signals are arranged in fourth and eleventh symbols. The uplink subframe may be a flexible subframe. Information used for scheduling the uplink signal is included in the uplink grant.

The second uplink reference signal of the condition B may be transmitted only in a case where the downlink control information format is an uplink grant (for example, DCI format 0/4). The second uplink reference signal of the condition B may also be transmitted in a case where the downlink control information format is a downlink grant

(for example, DCI format 1A/2B/2C). The second uplink reference signal of the condition B may also be transmitted in a case where the downlink control information format is a group triggering grant (for example, DCI format 3/3A). In a case of the group triggering grant, a transmission power control command is configured for each of the plurality of terminals. In a case of the group triggering grant, signal activation/deactivation is configured for each of the plurality of terminals. That is, a transmission scheme of the second uplink reference signal of the condition B may be switched depending on the type of the downlink control information format including the information on the transmission request of the second uplink reference signal. That is, under the condition B, in a case where the downlink control information format including information on a transmission instruction of the second uplink reference signal is an uplink grant, a group triggering grant or a grant for a transmission power control command, the terminal 2 may transmit the second uplink reference signal at the same timing as that of the uplink demodulation reference signal in a first uplink subframe after predetermined subframes (for example, four subframes) from the subframe in which the downlink control information format is detected. That is, the timing at which the second uplink reference signal is transmitted may be changed depending on the condition. Under the condition B, in a case where the downlink control information format including the information on the transmission request of the second uplink reference signal is a downlink grant, the terminal 2 may transmit the second uplink reference signal in the transmission subframe which is specifically configured for an initial second uplink reference signal after predetermined subframes (for example, four subframes) from the subframe in which the downlink control information format is detected according to the parameter related to the transmission subframe included in the configuration of the second uplink reference signal. Here, the information on the transmission request of the uplink reference signal includes information for indicating whether or not to transmit the uplink reference signal.

The base sequence of the second uplink reference signal may be generated using different methods depending on whether or not to the information on the first configuration is configured. That is, the terminal 2 may generate the base sequence of the second uplink reference signal of the condition A based on the first method, and may generate the base sequence of the second uplink reference signal of the condition B based on the second method. In this case, the base sequence of the first uplink reference signal of any condition of the condition A and the condition B may be generated based on the first method. Here, the first method may be a pseudo-random sequence. The second method may be a sequence different from the pseudo-random sequence. The second method may be a derivative sequence or an improved sequence of the pseudo-random sequence. The first method may be a Gold sequence. The second sequence is a sequence different from the Gold sequence. The base sequence of the uplink demodulation reference signal and the base sequence of the second uplink reference signal of the condition A may be generated using the same method. The first method may be a Zadoff-Chu sequence, and the second method may be a sequence different from the Zadoff-Chu sequence. Signal sequences of various reference signals may be generated based on the base sequence.

The base sequence of the second uplink reference signal of the condition B and the base sequence of the uplink demodulation reference signal may be generated using different methods. Accordingly, it is possible to allocate the second uplink reference signal and the uplink demodulation reference signal without inferring in each other even though these signals are allocated to the same time-frequency resource. That is, the sequences of the second uplink reference signal of the condition B and the uplink demodulation reference signal are generated so as not to interfere in each other.

The base sequence of the second uplink reference signal may be initialized in the same cell ID regardless of whether or not the first configuration is set by the higher layer. In a case where the parameter related to the virtual cell ID is configured for the configuration of the second uplink reference signal, this cell ID may be the virtual cell ID, and in a case where the parameter related to the virtual cell ID is not configured for the configuration of the second uplink reference signal, this cell ID may be a physical cell ID.

The resource allocation of the second uplink reference signal (transmission bandwidth, frequency domain position, cyclic shift, transmission comb, transmission symbol, the amount of antenna ports, or hopping bandwidth) may be performed using an independent parameter depending on whether or not the first configuration is set by the higher layer. That is, the terminal 2 may configure a parameter related to the allocation of a plurality of resources for the second uplink reference signal.

The resource allocation of the uplink demodulation reference signal and the second uplink reference signal of the condition B may be independently performed.

The transmission power control of the second uplink reference signal may be controlled using an independent parameter depending on whether or not the first configuration is set by the higher layer.

The transmission power of the second uplink reference signal of the condition A may be controlled based on a first TPC command, and the transmission power of the second uplink reference signal of the condition B may be controlled based on at least a second TPC command. The transmission power of the second uplink reference signal of the condition B may be controlled based on the first TPC command. The base station 1 may be able to configure a power control adjustment value (f(i) and/or g(i)) by using a correction value notified by the first TPC command, and may be able to configure the power control adjustment value (f(i) and/or g(i)) by using an absolute value notified by the second TPC command.

In the condition B, the type of the downlink control information format may be increased. For example, the information indicating the component carrier may be included in the downlink control information format (for example, DCI format 3/3A) for configuring the transmission control command for the physical uplink shared channel or the physical uplink control channel. The downlink control information format for configuring the transmission power control command for notifying of the absolute value may be added.

The downlink path loss applied to the transmission power control of the second uplink reference signal may be calculated based on a different downlink reference signal depending on whether or not the first configuration is set by the higher layer. That is, in the condition A, the terminal 2 may perform reception power measurement based on the first downlink reference signal, and may calculate a downlink path loss from the measurement result. In the condition B, the terminal 2 may perform the reception power measurement based on the second downlink reference signal, and may calculate the downlink path loss from the measurement result. These downlink path losses may be used for the transmission power control of the second uplink reference signal. For example, the first downlink reference signal may be a cell-specific reference signal, and the second downlink reference signal may be a channel state information reference signal. The first downlink reference signal may be a first channel state information reference signal, and the second downlink reference signal may be a second channel state information reference signal. The first downlink reference signal may be a first cell-specific reference signal, and the second downlink reference signal may be a second cell-specific reference signal. In a case of switching the same type of downlink reference signal, at least one parameter of various parameters (for example, resource configuration or subframe configuration, cell ID, and antenna port number) configured for these downlink reference signals may be independently configured. Meanwhile, a parameter shared between these downlink reference signals may be configured.

The second uplink reference signal may be transmitted using a different antenna port number depending on whether or not the first configuration is set by the higher layer. That is, the terminal 2 may transmit the second uplink reference signal of the condition A using a first antenna port number group, and may transmit the second uplink reference signal of the condition B using a second antenna port number group. For example, in a case where 4-antenna port transmission is configured for the second uplink reference signal, the terminal 2 may transmit the second uplink reference signal of the condition A using antenna port numbers 40, 41, 42 and 43, and may transmit the second uplink reference signal of the condition B using antenna port numbers 400, 401, 402 and 403. That is, the terminal 2 may use different antenna port numbers depending on the condition even with the same index. That is, in the condition B, the antenna ports of the first uplink reference signal and the second uplink reference signal may be different.

In a case where frequency hopping of the second uplink reference signal can be performed, the frequency hopping is applied to the second uplink reference signal of the condition A between the transmission subframes, whereas the frequency hopping is applied to the second uplink reference signal of the condition B between the slots.

A range of various parameter values configured for the second uplink reference signal in the condition A may be different from that in the condition B. For example, the cyclic shift may have a range of from 0 to 7 which is configured for the second uplink reference signal of the condition A, and may have a range of from 0 to 11 which is configured for the second uplink reference signal of the condition B. That is, sequence generation may be performed with a smaller cyclic shift value. The transmission comb may have a range of 0 and 1 which is configured for the second uplink reference signal of the condition A, and may have a range of from 0 to 3 which is configured for the second uplink reference signal of the condition B. That is, mapping may be performed at a wider subcarrier spacing. In contrast, the mapping may be performed at a narrower subcarrier spacing. That is, the base station 1 may configure the parameter(s) such that more terminals 2 can transmit the second uplink reference signals. The transmission bandwidth is managed based on a table, but may be managed based on a table in which different values are configured for the second uplink reference signal of the condition A and the second uplink reference signal of the condition B. That is, different values may be configured for the second uplink reference signal of the condition A and the second uplink reference signal of the condition B even though the same index is selected at the same system bandwidth. Four bits (16 steps) of transmission power offsets may be configured for the second uplink reference signal of the condition A, whereas five bits (32 steps) of transmission power offsets may be configured for the second uplink reference signal of the condition B. That is, the range of various parameter values may be expanded by setting the first configuration.

In a case where the first configuration is set by the higher layer, if the information on the transmission request of the second reference signal is detected from different downlink control information formats in the same subframe, the terminal 2 may transmit the second uplink reference signals associated with the respective downlink control information formats in a first uplink subframe after predetermined subframes.

In the transmission of the second uplink reference signal of the condition B, in a case where the transmission of the physical uplink control channel is performed, if the sum of the transmission power of the physical uplink control channel and the transmission power of the second uplink reference signal of the condition B exceeds the maximum transmission power configured for the terminal 2, the terminal may perform control such that the second uplink reference signal of the condition B is not transmitted. That is, the terminal 2 may perform transmission control such that the physical uplink control channel is preferentially transmitted.

The second uplink reference signal is transmitted by a first scheme under the condition A, and is transmitted by a second scheme under the condition B.

The terminal 2 may not expect that a plurality of downlink control information formats including the information on the transmission request of the second uplink reference signal will be detected in a certain subframe of a certain serving cell. However, in a case where the first configuration is set by the higher layer, if the information on the transmission request of the second uplink reference signal is included in different downlink control information formats, the terminal 2 may transmit two second uplink reference signals in the same subframe. By transmitting the two second uplink reference signals, in a case where the transmission power for the subframe of the serving cell exceeds the maximum transmission power configured for the terminal 2, the two second uplink reference signals may not be transmitted.

If the condition B is satisfied, the terminal 2 can constantly transmit the second uplink reference signal in a first uplink subframe after predetermined subframes (for example, four subframes) from the subframe in which the downlink control information format including the information on the transmission request of the second uplink reference signal is received. In the condition A, the terminal 2 constantly transmits the second uplink reference signal in a first subframe configured which is specifically configured for a second uplink reference signal after predetermined subframes (for example, four subframes) from the subframe in which the downlink control information format including the information on the transmission request of the second uplink reference signal is received. That is, in the condition B, the terminal 2 transmits the second uplink reference signal in the same subframe as those of the physical uplink shared channel and the uplink demodulation reference signal.

The terminal 2 may switch transmission schemes of the second uplink reference signal depending on the number of configured transmission timing adjustment information items (TA: Timing Advance). For example, in a case where only one transmission timing adjustment information item is configured for the terminal 2, the second uplink reference signal of the condition A is transmitted, and in a case where the transmission timing adjustment information items are notified to the terminal 2 multiple times (a plurality of transmission timing adjustment information items is notified to the terminal 2), the second uplink reference signal of the condition A is transmitted. That is, the information on the first configuration may be information on transmission timing adjustment.

In a case where the first configuration is set, the terminal 2 may overlap the resources of the uplink demodulation reference signal and the second uplink reference signal, and may transmit the signals. In a case where the first configuration is set, the terminal 2 may arrange the resources of the uplink demodulation reference signal and the second uplink reference signal in different time resources, and may transmit the signals. In a case where the first configuration is set, the terminal 2 may transmit the second uplink reference signal and the uplink demodulation reference signal in the same subframe. In a case where the first configuration is not set, since the second uplink reference signal is transmitted based on the transmission subframe set based on the configuration of the second uplink reference signal, the terminal 2 may not necessarily transmit the second uplink reference signal and the uplink demodulation reference signal (or the physical uplink shared channel) in the same subframe.

If the first configuration is set, the terminal 2 can transmit these physical channels even though resources of the second uplink reference signal of the condition B and another physical channel are overlapped using the same component carrier. For example, in a case where the first configuration is set and the simultaneous transmission of the physical uplink shared channel and the physical uplink control channel is valid, if the sum of the transmission powers of the physical uplink shared channel, the physical uplink control channel and the second uplink reference signal does not exceed a maximum transmission power configured for the terminal 2 in a certain subframe, the physical uplink shared channel, the physical uplink control channel and the second uplink reference signal may be transmitted in the same subframe. If the sum of the transmission powers of the physical uplink shared channel, the physical uplink control channel and the second uplink reference signal exceeds the maximum transmission power configured for the terminal 2, the second uplink reference signal is not transmitted.

In a case where the same resource is allocated to various uplink signals, the base station 1 can detect the various uplink signals using a difference between signal sequences of the respective uplink signals. That is, the base station 1 can identify the respective uplink signals using a difference between signal sequences of the received uplink signals. The base station 1 can determine whether or not the destination of the transmission is the base station using a difference between signal sequences of the respective uplink signals.

In a case where an instruction to measure the reception power by the second downlink reference signal is given from the base station 1, the terminal 2 may calculate the downlink path loss based on the measurement result, and may use the uplink transmission power control.

Here, the reception power measurement is referred to as reference signal received power (RSRP) measurement or reception signal power measurement. The reception quality measurement is referred to as reference signal received quality (RSRQ) measurement or reception signal quality measurement.

The resource allocation (mapping to resource elements, mapping to physical resources) of the second downlink reference signal may be shifted in frequency. The frequency shift of the second downlink reference signal may be determined based on the physical cell ID. The frequency shift of the second downlink reference signal may be determined based on the virtual cell ID.

As one example, information instructing whether or not to perform the reception power measurement of the second downlink reference signal is notified to the terminal 2 from the base station 1. In a case where the instruction information instructs to perform the reception power measurement of the second downlink reference signal, the terminal 2 performs the reception power measurement of the second downlink reference signal. In this case, the terminal 2 may perform the reception power measurement of the first downlink reference signal in parallel. In a case where the instruction information instructs not to perform the reception power measurement of the second downlink reference signal, the terminal 2 performs the reception power measurement of only the first downlink reference signal. The instruction information may include the information instructing whether or not to perform the reception quality measurement of the second downlink reference signal. The reception power measurement may be performed on the third downlink reference signal regardless of the instruction information.

As another example, information instructing whether or not to perform the reception power measurement of the first downlink reference signal or perform the reception power measurement of the second downlink reference signal is notified to the terminal 2 from the base station 1. In a case where the instruction information instructs to perform the reception power measurement of the first downlink reference signal, the terminal 2 performs the reception power measurement of the first downlink reference signal. In a case where the instruction information instructs to perform the reception power measurement of the second downlink reference signal, the terminal 2 performs the reception power measurement of the second downlink reference signal. That is, the instruction information is information instructing to switch the reception power measurement. The instruction information may include information instructing whether or not to perform the reception quality measurement. The reception power measurement may be performed for the third downlink reference signal regardless of the instruction information. The transmission power of the second downlink reference signal and/or the transmission power of the third downlink reference signal may be set based on the transmission power of the first downlink reference signal. For example, a power ratio (power offset) between the first downlink reference signal and the second downlink reference signal (or the third downlink reference signal) may be configured.

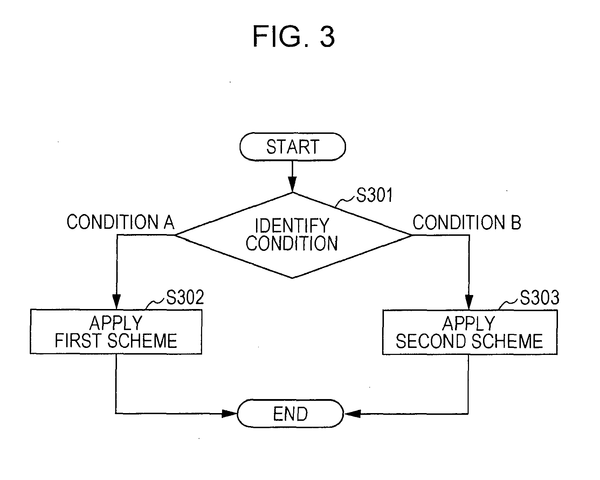

As shown in Fig. 3, the terminal 2 identifies the condition, and performs the reception power measurement based on the condition. The terminal 2 identifies the condition (step S301). In a case of identifying the condition A (S301: condition A), the terminal 2 performs transmission based on a first scheme (step S302). In a case of identifying the condition B (S301: condition B), the terminal 2 performs transmission base on a second scheme (step S303).

Here, referring to Fig. 3, in the first embodiment, the condition A includes an instruction not to perform the transmission based on the second scheme. The condition B includes an instruction to perform the transmission based on the second scheme. The first scheme and the second scheme include a sequence generating process. The first scheme and the second scheme include a coding process. The first scheme and the second scheme include a resource allocating process.

The terminal 2 can switch the transmission resource of the second uplink reference signal depending on whether or not the first configuration is set. The terminal 2 can switch the transmission timing of the second uplink reference signal depending on whether or not the first configuration is set. The terminal 2 can switch the signal sequence of the second uplink reference signal depending on whether or not the first configuration is set. In other words, the terminal 2 can switch the transmission resource of the second uplink reference signal depending on whether or not the information on the first configuration is notified. The terminal 2 can switch the transmission timing of the second uplink reference signal depending on whether or not the information on the first configuration is notified. The terminal 2 can switch the signal sequence of the second uplink reference signal depending on whether or not the information on the first configuration is notified.

It is possible to perform appropriate transmission control by switching the transmission scheme of the uplink reference signal regardless of the configuration of the transmission subframe depending on the condition. Particularly, in the TDD, since the subframe capable of transmitting the uplink signal is limited, it is possible to realize more efficient transmission control.

### (Second Embodiment)

Next, a second embodiment will be described. In the second embodiment, the base station 1 notifies the terminal 2 of the information on the first configuration. The base station 1 notifies the terminal 2 of the information on the configuration of the first uplink reference signal and the information on the configuration of the second uplink reference signal. One or a plurality of base stations 1 transmits a plurality of downlink control information formats including the information on the transmission requests of the second uplink reference signals in the same subframe using the physical downlink control channel to the terminal 2. The terminal 2 sets the configuration of the first uplink reference signal and the configuration of the second uplink reference signal. In a case where the first configuration is set, if the information on the transmission requests of the second uplink reference signals is detected from the plurality of downlink control information formats in a certain subframe, the terminal 2 transmits the plurality of second uplink reference signals in a first uplink subframe after predetermined subframes (for example, four subframes) from a certain subframe. In a case where the first configuration is not set, the terminal 2 does not expect that the transmission requests of the plurality of second uplink reference signals will be notified to a certain uplink subframe of a certain serving cell. For example, in a case where transmission requests of the plurality of second uplink reference signals are detected in a certain uplink subframe of a certain serving cell, the transmission request of the initially detected second uplink reference signal may be valid, and the transmission requests of the subsequently detected second uplink reference signals may be invalid. In a case where the transmission requests of the plurality of second uplink reference signals are detected in a certain uplink subframe of a serving cell, the transmission request of the latest second uplink reference signal may be valid. In a case where the transmission requests of the plurality of second uplink reference signals are detected in a certain uplink subframe of a certain serving cell, if the transmission requests of the plurality of second uplink reference signals are detected as the same value from the same type of downlink control information format, the transmission requests of the plurality of second uplink reference signals may be valid. However, since it is not assumed that values configured for various parameters included in the configuration of the second uplink reference signal are changed while the terminal 2 receives the same type of downlink control information format, the terminal may not transmit the second uplink reference signal, may transmit the second uplink reference signal generated by the transmit request of the latest second uplink reference signal, may transmit the second uplink reference signal generated by the transmission request of the latest second uplink reference signal, or may transmit the second uplink reference signal generated by the transmission request of the second uplink reference signal immediately before or immediately after the parameter is changed. That is, in the condition B, the terminal 2 can detect information on the transmission requests of the plurality of second uplink reference signals in a certain uplink subframe of a certain cell.

Parameters of the second uplink reference signals associated with the information on the transmission requests of the second uplink reference signals included in the different downlink control information formats are dependently configured. For example, in a case where a transmission request is included in a downlink control information format A, a second uplink reference signal generated using a parameter set A is transmitted, and in a case where a transmission request is included in a downlink control information format B, a second uplink reference signal generated using a parameter set B is transmitted. Various parameters such as a transmission bandwidth, a transmission subframe, a cyclic shift, a transmission comb, a frequency position, the number of antenna ports, a hopping bandwidth, a virtual cell ID, and the number of times of transmission are set to the respective parameter sets. For example, in a case where a downlink control information format 0 which is an uplink grant and a downlink control information format 2C which is a downlink grant are received in the same frame, if the information on the transmission request of the second uplink reference signal is included, the terminal 2 transmits the second uplink reference signal associated with the downlink control information format 0 and the downlink control information format 2C in the same uplink subframe.

In a certain uplink subframe, in a case where the sum of the transmission powers of another uplink physical channel, a second uplink reference signal A and a second uplink reference signal B exceeds the transmission power configured for the terminal 2, the second uplink reference signal A and the second uplink reference signal B are not transmitted, and the another uplink physical channel is preferentially transmitted.

In a case where there is a margin in the transmission power (in a case where the sum thereof does not exceed the maximum transmission power of the terminal 2), the terminal 2 may transmit the respective second uplink reference signals in the same subframe according to the information on the transmission requests of the second uplink reference signals detected from the different downlink control information formats. In a case where there is no margin in the transmission power, the terminal 2 may not transmit the second uplink reference signals. That is, the terminal 2 may perform the transmission control depending on a transmission power value. The terminal 2 may set the transmission priority depending on the type of physical channels.

It is possible to perform more effective channel estimation by performing the simultaneous transmission control of the second uplink reference signals depending on the condition.

In the respective embodiments, it is possible to switch the transmission scheme of the second uplink reference signal for each cell.

In the respective embodiments, the terminal 2 may report the measurement result of the reception power based on the second downlink reference signal to the base station 1. The terminal 2 may perform the report at regular intervals. The terminal 2 may perform the report in a case where any condition is satisfied.

In the respective embodiments, in a case where the reception power based on the second downlink reference signal is measured, the terminal 2 may perform the transmission power control of the uplink signal based on the reception power. The terminal 2 may determine the downlink path loss based on the reception power.

In the respective embodiments, in a case where the sum of the transmission powers of various uplink signals including the transmission powers of the first uplink reference signal and/or the second uplink reference signal exceeds the maximum transmission power configured for the terminal 2, the terminal 2 may not transmit the first uplink reference signal and/or the second uplink reference signal.

In the respective embodiments, in a case where the first configuration is set, the terminal 2 may not transmit the first uplink reference signal (for example, P-SRS) to the cell (serving cell) to which the first configuration is set. In the respective embodiments, in a case where the first configuration is set, the terminal 2 may not transmit the uplink reference signal to which a specific transmission subframe is set by the higher layer.

In the respective embodiments, although it has been described that the resource block or the resource element is used as the mapping unit of the information data signal, the control information signal, the PDSCH, the PDCCH and the reference signal, and the radio frame, the subframe or the symbol as the transmission unit in the time domain is used, the present invention is not limited thereto. It is possible to obtain the same effects even though a time unit and a domain constituted by any frequency and time are used instead of the aforementioned units. In the respective embodiments, although it has been described that the demodulation is performed using the RS obtained by the precoding process and the port equivalent to a MIMO layer is used as the port corresponding to the RS obtained by the precoding process, the present invention is not limited thereto. It is possible to obtain the same effects by applying the present invention to ports corresponding to different reference signals in addition to the aforementioned port. For example, it is possible to use an unprecoded (non-predecoded) RS other than the precoded RS and a port equivalent to an output terminal after the precoding process or a port equivalent to a physical antenna (or a combination of physical antennas) as the port.

In the respective embodiments, the uplink transmission power control refers to the transmission power control of uplink physical channels (PUSCH, PUCCH, PRACH or SRS), and the transmission power control includes information on (re)configuring or switching various parameters used for the configurations of the transmission powers of various uplink physical channels.

In the respective embodiments, the base station 1 may configure a plurality of virtual cell IDs for one terminal. For example, the base station and the network including at least one base station may independently configure the virtual cell IDs for the physical channels/physical signals. The plurality of virtual cell IDs may be configured for one physical channel/physical signal. That is, the virtual cell ID may be set to each of the configurations of the physical channels/physical signals. The virtual cell ID may be shared between the plurality of physical channels/physical signals.

In the description of the respective embodiments, for example, the setting of the power includes setting the value of the power, the calculating of the power includes calculating the value of the power, the measuring of the power includes measuring the value of the power, and the reporting of the power includes reporting the value of the power. As mentioned above, the expression "the power" includes the meaning of the value of an appropriate power.

In the description of the respective embodiments, for example, the calculating of the path loss includes calculating the value of the path loss. As stated above, the expression "the path loss" includes the meaning of the value of an appropriate path loss.

In the description of the respective embodiments, the setting of the various parameters includes setting the values of the various parameters. As stated above, the expression "the various parameters" includes the meaning of the values of appropriate various parameters.

A program operated by the base station 1 and the terminal 2 according to the present invention is a program (program causing a computer to function) that controls a CPU such that the functions of the embodiments according to the present invention are realized. The information items used by these devices are temporarily accumulated in a RAM at the time of processing, are stored in various ROMs or HDDs, and corrected and written by being read by the CPU when necessary. As a recording medium that stores the program, any one of a semiconductor medium (for example, ROM or non-volatile memory card), an optical recording medium (for example, DVD, MO, MD, CD or BD), and a magnetic medium (for example, magnetic tape or flexible disc) may be used. Although the functions of the aforementioned embodiments are realized by executing the loaded program, the functions of the present invention may be realized by cooperatively processing the loaded program and an operating system or another application program based on the instruction of the program.

In a case of distributing the program in the market, the program can be distributed or can be transmitted to a server computer connected via the network such as the Internet by storing the program in a portable recording medium. In this case, a storage device of the server computer is also included in the present invention. A part or the whole of the base station 1 and the terminal 2 according to the aforementioned embodiments may be typically realized as LSI which is an integrated circuit. The functional blocks of the base station 1 and the terminal 2 may be individually implemented as a chip, or a part or all of the functional blocks may be integrally implemented as a chip. A method for achieving the integrated circuit is not limited to the LSI, and it may be achieved by a dedicated circuit or a general-purpose processor. In addition, when a technique for achieving an integrated circuit which replaces the LSI technique will be developed with the progress of a semiconductor technique, the integrated circuit manufactured by the developed technique can also be used.

The embodiments of the present invention have been described above in detail with reference to the drawings, but the detailed structure is not limited to the above-described embodiments. The present invention also includes a change in the design within the gist of the present invention. Various changes of the present invention can be made without departing from the scope of the claims and the technical scope of the present invention includes embodiments obtained by appropriately combining technical means described in different embodiments. In addition, the elements which are described in each of the above-described embodiments and have the same effect may be replaced with each other.

However, the present invention is not limited to the aforementioned embodiments. The present invention can also be applied to terminal devices or communication devices of stationary or non-movable electronic apparatuses which are installed indoors or outdoors, such as AV apparatuses, kitchen devices, cleaning and washing machines, air conditioners, office devices, vending machines, and other home appliances. The present invention can be applied to a radio base station, a radio terminal device, a radio communication system, or a radio communication method.

### DESCRIPTION OF REFERENCE NUMERALS

- 1: Base station
- 2: Terminal
- 101: Higher layer processing unit
- 103: Control unit
- 105: Reception unit
- 107: Transmission unit
- 109: Channel measurement unit
- 111: Transmit/receive antenna
- 1011: Radio resource control module
- 1013: Reference signal configuring module
- 1015: Transmission power configuring module
- 1051: Decoding module
- 1053: Demodulation module
- 1055: Demultiplexing module
- 1057: Radio reception module
- 1071: Coding module
- 1073: Modulation module
- 1075: Multiplexing module
- 1077: Radio transmission module
- 1079: Downlink reference signal generating module
- 201: Higher layer processing unit
- 203: Control unit
- 205: Reception unit
- 207: Transmission unit
- 209: Channel measurement unit
- 211: Transmit/receive antenna
- 2011: Radio resource control module
- 2013: Reference signal control module
- 2015: Transmission power control module
- 2051: Decoding module
- 2053: Demodulation module
- 2055: Demultiplexing module
- 2057: Radio reception module
- 2071: Coding module
- 2073: Modulation module
- 2075: Multiplexing module
- 2077: Radio transmission module
- 2079: Uplink reference signal generating module

## Claims

1. A terminal communicating with a base station, the terminal comprising:
a radio resource control module that sets a configuration of a first uplink reference signal, a configuration of a second uplink reference signal, and a first configuration;
an uplink reference signal generating module that generates a first uplink reference signal, a second uplink reference signal, and an uplink demodulation reference signal based on the configurations; and
a transmission unit that transmits the first uplink reference signal, the second uplink reference signal, and the uplink demodulation reference signal,
wherein in a case where the first configuration is set, the transmission unit transmits the first uplink reference signal in a transmission subframe set based on the configuration of the first uplink reference signal, and in a case where the first configuration is set, and if information used for scheduling an uplink signal is included in a downlink control information format including information on a transmission request of the second uplink reference signal, transmits the second uplink reference signal together with the uplink demodulation reference signal in an initial uplink subframe after predetermined subframes from a subframe in which the downlink control information format is detected.

2. The terminal according to claim 1,
Wherein if information used for scheduling a downlink signal is included in the downlink control information format, the transmission unit performs transmission in an initial transmission subframe set based on the configuration of the second uplink reference signal after predetermined subframes.

3. The terminal according to claim 1 or 2,
wherein the uplink reference signal generating module generates a reference sequence of the uplink demodulation reference signal and a reference sequence of the first uplink reference signal based on a first method, and generates a reference sequence of the second uplink reference signal based on a second method.

4. The terminal according to any one of claims 1 to 3,
wherein in a case where values are independently configured for a first parameter to a third parameter,
the uplink reference signal generating module initializes the reference sequence of the uplink demodulation reference signal using the first parameter, initializes the reference sequence of the first uplink reference signal using the second parameter, and initializes the reference sequence of the second uplink reference signal using the third parameter.

5. The terminal according to claim 3 or 4,
Wherein if the information used for scheduling the downlink signal is included in the downlink control information format, the uplink reference generating module generates the reference sequence of the second uplink reference signal based on the first method.

6. The terminal according to any one of claims 1 to 5,
wherein in a case where the transmission subframe is configured for a subframe configured as a downlink subframe, the transmission unit does not transmit the first uplink reference signal in the transmission subframe.

7. The terminal according to claim 1,
wherein in a case where the first configuration is not set, the transmission unit transmits the first uplink reference signal in a transmission subframe configured for the first uplink reference signal, and transmits the second uplink reference signal in an initial transmission subframe configured for the second uplink reference signal after predetermined subframes from a subframe in which the downlink control information format is detected.

8. A communication method of a terminal communicating with a base station, the method comprising:
a step of setting a configuration of a first uplink reference signal, a configuration of a second uplink reference signal, and a first configuration;
a step of generating a first uplink reference signal, a second uplink reference signal, and an uplink demodulation reference signal based on the configurations;
a step of transmitting the first uplink reference signal, the second uplink reference signal, and the uplink demodulation reference signal;
a step of transmitting in a case where the first configuration is set, the first uplink reference signal in a transmission subframe set based on the configuration of the first uplink reference signal; and
a step of transmitting in a case where the first configuration is set, and if information used for scheduling an uplink signal is included in a downlink control information format including information on a transmission request of the second uplink reference signal, the second uplink reference signal together with the uplink demodulation reference signal in an initial uplink subframe after predetermined subframes from a subframe in which the downlink control information format is detected.

9. The communication method according to claim 8, further comprising:
a step of transmitting, if information used for scheduling a downlink signal is included in the downlink control information format, in an initial transmission subframe set based on the configuration of the second uplink reference signal after predetermined subframes.

10. The communication method according to claim 8, further comprising:
a step of generating a reference sequence of the uplink demodulation reference signal and a reference sequence of the first uplink reference signal based on a first method; and
a step of generating a reference sequence of the second uplink reference signal based on a second method.

11. The communication method according to claim 8, further comprising:
a step of initializing in a case where values are independently configured for a first parameter to a third parameter, a reference sequence of the uplink demodulation reference signal using the first parameter, initializing a reference sequence of the first uplink reference signal using the second parameter, and initializing a reference sequence of the second uplink reference signal using the third parameter.

12. The communication method according to claim 10, further comprising:
a step of generating, if the information used for scheduling the downlink signal is included in the downlink control information format, the reference sequence of the second uplink reference signal based on the first method.

13. An integrated circuit mounted on a terminal communicating with a base station, the integrated circuit causing the terminal to exhibit:
a function of setting a configuration of a first uplink reference signal, a configuration of a second uplink reference signal, and a first configuration;
a function of generating a first uplink reference signal, a second uplink reference signal, and an uplink demodulation reference signal based on the configurations;
a function of transmitting the first uplink reference signal, the second uplink reference signal, and the uplink demodulation reference signal;
a function of transmitting in a case where the first configuration is set, the first uplink reference signal in a transmission subframe set based on the configuration of the first uplink reference signal; and
a function of transmitting in a case where the first configuration is set, and if information used for scheduling an uplink signal is included in a downlink control information format including information on a transmission request of the second uplink reference signal, the second uplink reference signal together with the uplink demodulation reference signal in an initial uplink subframe after predetermined subframes from a subframe in which the downlink control information format is detected.

14. The integrated circuit according to claim 13, further causing the terminal to exhibit:
if information used for scheduling a downlink signal is included in the downlink control information format, a function of transmitting in an initial transmission subframe set based on the configuration of the second uplink reference signal after predetermined subframes.

15. The integrated circuit according to claim 13, further causing the terminal to exhibit:
a function of generating a reference sequence of the uplink demodulation reference signal and a reference sequence of the first uplink reference signal based on a first method; and
a function of generating a reference sequence of the second uplink reference signal based on a second method.

16. The integrated circuit according to claim 13, further causing the terminal to exhibit:
in a case where values are independently configured for a first parameter to a third parameter, a function of initializing a reference sequence of the uplink demodulation reference signal using the first parameter, initializing a reference sequence of the first uplink reference signal using the second parameter, and initializing a reference sequence of the second uplink reference signal using the third parameter.
